# EUROPEAN PATENT SPECIFICATION

(11) **EP 2 985 957 B1**
(45) Date of publication and mention of the grant of the patent: **07.08.2019**
(21) Application number: 13887614.9
(22) Date of filing: 26.06.2013
(51) Int. Cl.: H04L 12/58

(54) **NETWORK DEVICE AND E-MAIL REQUEST PROCESSING METHOD**
NETZWERKVORRICHTUNG UND VERFAHREN ZUR VERARBEITUNG VON E-MAIL-ANFRAGEN
DISPOSITIF DE RÉSEAU ET PROCÉDÉ DE TRAITEMENT DE REQUÊTE DE COURRIER ÉLECTRONIQUE

(43) Date of publication of application: 17.02.2016
(73) Proprietor: Huawei Technologies Co., Ltd., Longgang District Shenzhen, Guangdong 518129 (CN)
(72) Inventor: ZHENG, Nenghong, Shenzhen Guangdong 518129 (CN); GUO, Xianzhi, Shenzhen Guangdong 518129 (CN)
(74) Representative: Pfenning, Meinig & Partner mbB
(86) International application number: PCT/CN2013/077995
(87) International publication number: WO 2014/205669

(56) References cited:
- CN-A- 1 859 332
- CN-A- 1 921 485
- CN-A- 101 106 537
- CN-A- 102 158 819
- JP-A- 2007 151 159
- US-A1- 2008 172 663
- US-B1- 6 654 787

## Description

### TECHNICAL FIELD

The present invention relates to the field of communications technologies, and in particular, to a network device and a method for processing an email request.

### BACKGROUND

An electronic mail (electronic mail, E-mail) is a communication manner of providing information exchange by electronic means. By using an email system on a network, a user can contact a network user anywhere in the world in a very fast manner. An email message may be in various forms such as text, image, and sound. Internet Message Access Protocol 4 (Internet Message Access Protocol 4, IMAP4) is a protocol that specifies how a personal computer remotely accesses an email server on the Internet to send and receive a mail. IMAP4 supports that a client, online or offline, can access and read an email message on a server. A user may directly perform an operation on the email message on the server by using a client device. Here, the operation includes: reading a mail message online or checking information online such as an email subject, a size, or a sender address. The user may further maintain (including operations such as moving, creating, deleting, renaming, sharing or capturing text) a mailing directory of the user on the server. IMAP4 supports that the user can determine, by browsing an email header, whether to receive or delete a specific portion of a mail, and creating or changing a folder or a mailbox on the email server. In addition, besides supporting an offline operation mode of POP3 (Post Office Protocol 3, Post Office Protocol 3), IMAP4 further supports an online operation and a disconnected operation. Therefore, IMAP4 provides the user with a function of selectively receiving a mail message from the email server, an information processing function based on the server, and a mailbox sharing function. Currently, IMAP4 has been widely applied as an important mail protocol.

At present, many security gateway devices support IMAP4. The security gateway devices generally implement, based on IMAP4, proxy of an email server. A security gateway receives a mail operation request sent by a client, and forwards, to the client according to the mail operation request, an email message acquired from the email server. In addition, the security gateway can implement, in the proxy process, security processing such as antivirus processing or mail filtering on the email message, so as to protect security of the client.

However, in the prior art, in a situation in which a user receives only a portion of an email message (for example, an attachment of an email), a security gateway cannot obtain content of the portion, in decoded form, of the email message. Therefore, the security gateway can forward, to the user, only the portion of the email message that does not undergo security processing and that is returned by an email server.

JP2007151159A provide an e-mail proxy server device for conducting an e-mail deletion process, without being affected by communication disconnection, in place of an e-mail server.

US 6 654 787 B1 (ARONSON DANIEL ALEX [US] ET AL) 25 November 2003 (2003-11-25), discloses a method and apparatus by which dynamic filtering techniques are applied to filter out unwanted e-mail messages at various stages of transmission across one or more networks.

### SUMMARY

The problems of the prior art are solved by the method for processing a request that a client device acquires an email message from an email server according to claim 1 and the security gateway according to claim 7. The dependent claims describe advantageous embodiments of the method according to claim 1.

### BRIEF DESCRIPTION OF DRAWINGS

To describe the technical solutions in the embodiments of the present invention or in the prior art more clearly, the following briefly introduces the accompanying drawings required for describing the embodiments or the prior art.
FIG. 1 is a diagram of an application scenario of a method for processing an email request according to an embodiment of the present invention;
FIG. 2 is a schematic structural diagram of an email message according to an embodiment of the present invention;
FIG. 3 is a schematic diagram of a physical structure of a security gateway according to an embodiment of the present invention;
FIG. 4 is a flowchart of a method for processing an email request according to an embodiment of the present invention;
FIG. 5 is a flowchart of another method for processing an email request according to an embodiment of the present invention; and
FIG. 6 is a schematic signaling diagram of another method for processing an email request according to an embodiment of the present invention.

### DESCRIPTION OF EMBODIMENTS

To make a person skilled in the art understand the technical solutions in the present invention better, the following clearly and completely describes the technical solutions in the embodiments of the present invention with reference to the accompanying drawings in the embodiments of the present invention. Apparently, the described embodiments are merely a portion rather than all of the embodiments of the present invention.

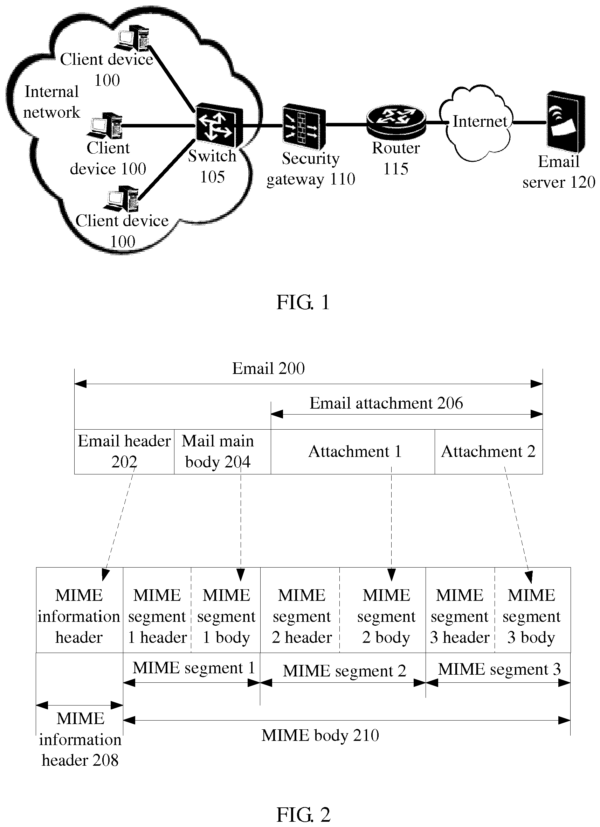

FIG. 1 is a diagram of an application scenario of a method for processing an email request according to an embodiment of the present invention. In the application scenario shown in FIG. 1, a client device 100, a switch 105, a security gateway 110, a router 115, and an email server 120 are included. All the client device 100, the security gateway 110, and the email server 120 can support Internet Message Access Protocol 4 (Internet Message Access Protocol 4, IMAP4). The security gateway 110 may be deployed at an egress of an intranet, an egress of the Internet, or a front end of the email server 120. The security gateway 110 may establish a connection between the client device 100 and the email server 120 in a transparent proxy or non-transparent proxy manner. The security gateway 110 can perform security processing, such as virus detection and mail filtering, on an email message sent by the email server 120 to the client device 100, so as to protect security of the client device 100 on the intranet. Transparent proxy refers to that the client device 100 does not know existence of a proxy device (for example, the security gateway 110 in FIG. 1), and the client device 100 and the email server 120 can communicate with each other by using a transparent channel established by the security gateway 110. Non-transparent proxy refers to that the client device 100 knows existence of the security gateway 110, and the client device 100 can access the email server 120 only by using the security gateway 110.

For example, in the application scenario shown in FIG. 1, the security gateway 110 is deployed at the egress of the intranet, and establishes the connection between the client device 100 and the email server 120 in the transparent proxy manner. The client device 100 accesses, based on IMAP4, the email server 120 on the Internet. An access request of the client device 100 arrives at the security gateway 110 by using the switch 105. Serving as a proxy device of the email server 120, the security gateway 110 may determine, according to the access request of the client device 100, whether the security gateway 110 has cached an email message required by the client device 100. If the email message required by the client device 100 is cached, the security gateway 110 may directly send the email message to the client device 100. If no email message required by the client device 100 is cached, the security gateway 110 may send the access request of the client device 100 to the email server 120 by using the router 115, and forward the email message to the client device 100 after performing security processing, such as virus detection and mail filtering, on the email message returned by the email server 120.

In this embodiment of the present invention, multiple client devices 100 may be included. The client device 100 may be a device that can implement network access, for example, a mobile phone or a computer. It should be noted that the security gateway 110 in this embodiment of the present invention is only an example of a network device. This embodiment of the present invention may also be applied to another network device that can implement, based on IMAP4, a mail proxy function, for example, a firewall. In addition, the network device may be separately deployed on a network as an independent device, or may be located in another device such as a firewall or a security gateway, which is not limited in this embodiment.

Most email messages are transmitted in a format specified by a Multipurpose Internet Mail Extensions (Multipurpose Internet Mail Extensions, MIME) protocol. The MIME protocol is an extended email standard and can support email messages of various formats such as a non-ASCII character and a binary format attachment. For clarity of description, in this embodiment of the present invention, the email message is divided into three portions: an email header, a mail main body, and an attachment. The email header includes information such as an email sent date, a sender address, a receiver address, and an email subject.

A person skilled in the art can learn that the MIME protocol is implemented by means of header additional fields (fields) of a standard email message. These header additional fields describe content and an organizational form of a new message type. In this embodiment of the present invention, an email message in an MIME format is divided into an MIME information header and an MIME body. The MIME information header is implemented by adding header additional fields of an email header of the email message. According to this manner, the MIME information header includes content of the email header. Field information recorded in the additional fields in the MIME information header acts on the entire email message. The MIME information header may include the following fields:
MIME-Version: MIME version, which is used to indicate a version of an MIME protocol with which a packet complies, for example, Mime-Version: 1.0;
Content-Type: content type, which is used to specify a type of a packet. Generally, Content-Type may include text, image, audio, video, applications, multipart, message, and the like, for example, Content-Type: multipart/mixed. Content-Type may further include a character set (char set) of a text encoding manner of a main body or the like, where the character set (char set) may include character types such as ASCII, GB2312, Times New Roman, and Arial;
Content-Transfer-Encoding: content transfer encoding, which is used to specify an encoding manner executed for data and includes transfer encoding types such as 7bit, 8bit, base64, binary, quoted-printable, and custom, for example, Content-Transfer-Encoding: base64;
Content-Disposition: content disposition, which is used to prompt a customer to decide whether an attachment is displayed inline or acts as an independent attachment, for example, Content-Disposition: attachment; and
Content-Description: content description, which is a free text used to describe any information segment content.

The MIME body may include multiple MIME segments. Each MIME segment is implemented by adding header additional fields of a main body or an attachment of an email. According to this manner, the MIME segments separately include the main body or the attachment of the email. In this embodiment of the present invention, each MIME segment is divided into an MIME segment header and an MIME segment body. The MIME segment header may include any other field, except MIME-Version, in the MIME information header. Field information recorded in the MIME segment header can act on only the MIME segment. For example, if Content-Transfer-Encoding exists in the MIME information header, it is applied to an entire information body. However, if Content-Transfer-Encoding is displayed in an MIME segment header of an MIME segment, it can be applied to only the MIME segment. Because any non-7bit data in an email message can pass through an Internet mail gateway only after being encoded in an encoding mode, a client device may decode a received email message by using Content-Transfer-Encoding information. The MIME segment body includes a main body or attachment of an email that is encoded by using Content-Transfer-Encoding in the MIME segment header. Certainly, it can be understood that, if the MIME segment header does not include the Content-Transfer-Encoding information, the MIME segment body is a main body or attachment of an email that is encoded by using Content-Transfer-Encoding information included in the MIME information header.

FIG. 2 is a schematic structural diagram of an email message according to an embodiment of the present invention. As shown in FIG. 2, an email message 200 includes an email header 202, a mail main body 204, and an email attachment 206. The email attachment 206 includes two attachments: an attachment 1 and an attachment 2. After the email message 200 is processed by using a format specified in an MIME protocol, the email message 200 may be divided into two portions: an MIME information header 208 and an MIME body 210. The MIME information header 208 includes information in the email header 202, and may specifically include information such as a sending date of the email message, a sender address, a receiver address, and an email subject. The MIME body 210 further includes three MIME segments: an MIME segment 1, an MIME segment 2, and an MIME segment 3. The MIME segment 1 includes content of the mail main body 204; the MIME segment 2 includes content of the attachment 1; and the MIME segment 3 includes content of the attachment 2. Each MIME segment is further divided into two portions: an MIME segment header and an MIME segment body. For example, the MIME segment 1 is divided into an MIME segment 1 header and an MIME segment 1 body; the MIME segment 2 is divided into an MIME segment 2 header and an MIME segment 2 body; and the MIME segment 3 is divided into an MIME segment 3 header and an MIME segment 3 body. The MIME segment 1 header may include field information such as Content-Type and Content-Transfer-Encoding, where a Content-Type field may further include a character set (char set) of the mail main body 204; and the MIME segment 1 body includes content of the mail main body 204 that is encoded in an encoding manner specified by a Content-Transfer-Encoding field in the MIME segment 1 header. The MIME segment 2 header may include field information such as Content-Type, Content-Transfer-Encoding, and Content-Disposition. In a Content-Disposition field, a file name of an attachment may further be specified, and the MIME segment 2 body includes content of the attachment 1 that is encoded in an encoding manner specified by a Content-Transfer-Encoding field in the MIME segment 2 header. A structure of the MIME segment 3 is similar to that of the MIME segment 2, and details are not repeatedly described in this embodiment.

Because IMAP4 allows a client device to acquire all or a portion of an email message, when the client device wants to acquire only a mail main body or an attachment, an email server returns only the MIME segment 1 body, the MIME segment 2 body, or the MIME segment 3 body shown in FIG. 2, but does not return information in the MIME segment 1 header, the MIME segment 2 header, or the MIME segment 3 header. Therefore, a network device such as a firewall or a gateway cannot learn encoding information of the mail main body or the attachment. The network device cannot perform a decoding operation to learn the mail main body or the attachment that is in decoded form; and further, the network device cannot perform security processing, such as antivirus processing or mail filtering, on content of the mail message that is in decoded form.

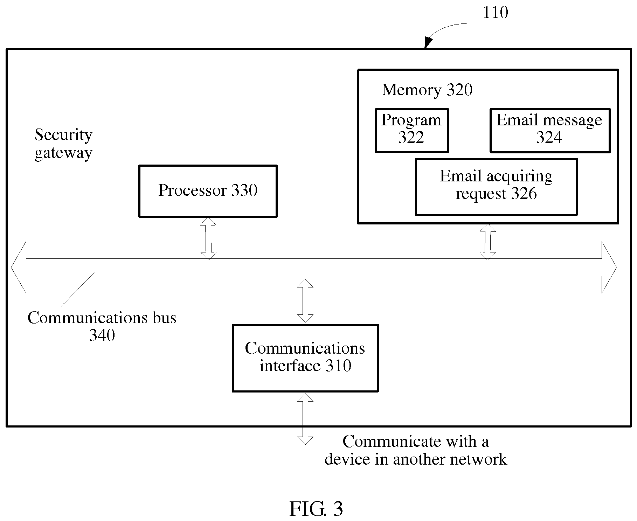

FIG. 3 is a schematic diagram of a physical structure of the security gateway 110 in FIG. 1 according to an embodiment of the present invention. As shown in FIG. 3, the security gateway 110 includes: a communications interface (Communications Interface) 310, a memory (memory) 320, a processor (processor) 330, and a communications bus 340. The communications interface 310, the memory 320, and the processor 330 communicate with each other by using the communications bus 340.

The communications interface 310 is configured to communicate with another device. The another device may include a device such as a client device, a switch, a router, or an email server.

The memory 320 is configured to store a program 322, cache an email acquiring request 326 sent by the client device 100, and cache an email message 324 sent by the email server 120. The memory 320 may include a high-speed RAM memory, and may further include a non-volatile memory (non-volatile memory), for example, at least one magnetic disk memory. It can be understood that, the memory 320 may be any non-transitory (non-transitory) machine-readable medium that can store program code, such as a ROM, a RAM, a magnetic disk, a hard disk, an optical disc, or a non-volatile memory. The memory 320 may further cache another email operation request such as a request for reading an email message.

The program 322 may include program code, where the program code includes a computer operation instruction.

The processor 330 may be a central processing unit CPU or an application-specific integrated circuit ASIC (Application-Specific Integrated Circuit), or may be configured as one or more integrated circuits implementing the embodiments of the present invention.

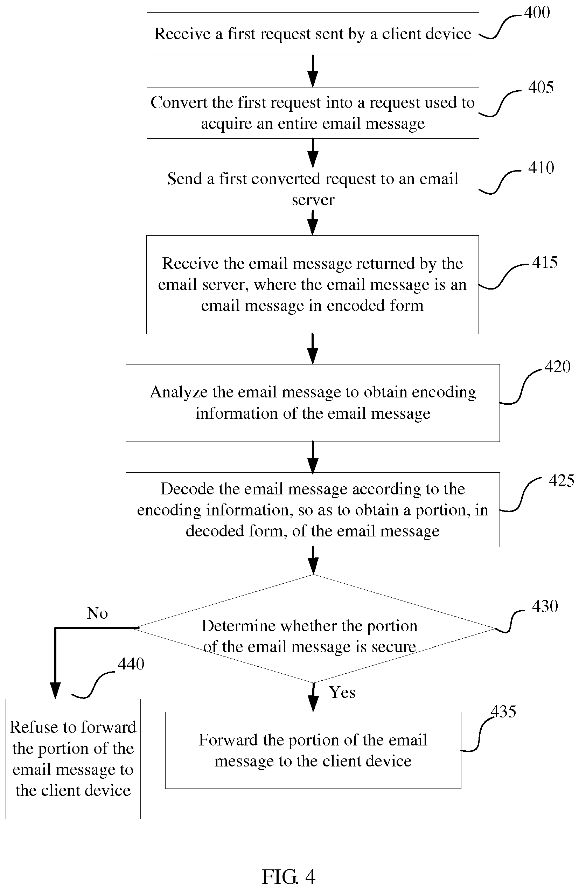

In this embodiment of the present invention, the processor 330 is configured to execute the program 322, and may specifically execute related steps in method embodiments shown in FIG. 4 to FIG. 5.

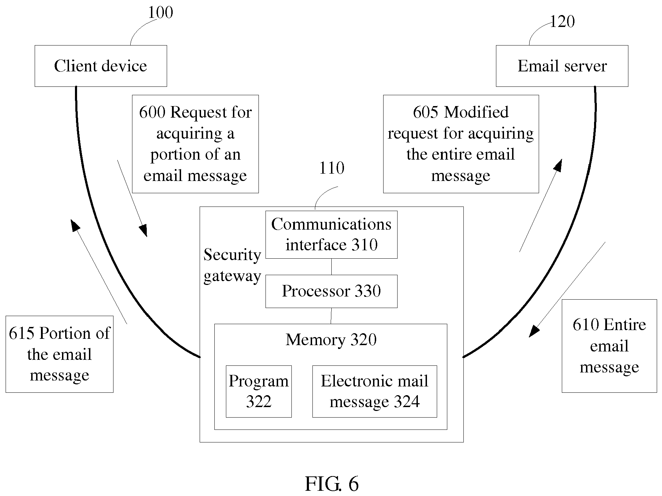

FIG. 4 is a flowchart of a method for processing an email request according to an embodiment of the present invention. The method may be executed by the security gateway 110 in FIG. 1 and FIG. 3. The security gateway 110 is configured to process a mail acquiring request sent by a client device, where the mail acquiring request is used to acquire a mail from an email server. The following describes the method in FIG. 4 with reference to FIG. 1 and FIG. 6. The method may include:

In step 400, the security gateway 110 receives a first request sent by the client device 100, where the first request is used to acquire a portion of an email message, and the portion of the email message does not include an email header of the email message.

In an actual application, a user may decide, by browsing the email header of the email message, to receive or browse only other portions, except the email header, of the email message. For example, a main body or an attachment of the email message may be received, or a main body and an attachment of the email message may be received. As shown in FIG. 6, FIG. 6 is a schematic signaling diagram of another method for processing an email request according to an embodiment of the present invention. In the schematic signaling diagram shown in FIG. 6, the client device 100 sends the first request 600 used to acquire the portion of the email message to the security gateway 110. The first request 600 sent by the client device 100 carries an email ID of the email message and an ID of the to-be-acquired portion of the email message.

The first request 600 may be formatted according to IMAP4. Specifically, the first request 600 may be formatted based on a FETCH command of IMAP4. For example, the first request may be fhn6 UID FETCH 77 (BODY.PEEK[2]), and the first request is used to acquire a first attachment of an email message whose email ID is 77, where: "fhn6" is a tag of the request and is used to identify the request; "UID" is the email ID of the email message and can uniquely identify the email message; a UID may be a specific value, or may be a list or a range, where when a value of the UID is a list or a range, it is used to indicate multiple email messages; "FETCH" is a command that is specified by IMAP4 and that is used to acquire the email message; "77" is a value of the email ID UID; "2" is an ID of a to-be-acquired portion of the email message, and represents the first attachment of the email message; and "(BODY.PEEK[2])" indicates that it is requested to acquire the first attachment of the email message. It can be understood that, the ID of the to-be-acquired portion of the email message may also be a specific value, a list, or a range. When the ID of the acquired portion of the email message is a list or a range, it is used to indicate that multiple portions of the email message are acquired. For example, "(BODY.PEEK[2-4])" is used to indicate that it is requested to acquire the first to third attachments of the email message.

A person skilled in the art can learn that, when the security gateway 110 performs proxy in a transparent proxy manner, the security gateway 110 may intercept an email message acquiring request sent by the client device 100 to the email server 120. When the security gateway 110 performs proxy in a non-transparent proxy manner, the client device 100 may directly send an email message acquiring request to the security gateway 110. This embodiment of the present invention sets no limit on a proxy manner of the security gateway 110.

In step 405, the security gateway 110 converts the first request 600 into a request 605 used to acquire the entire email message. After receiving the first request 600 of the client device 100, the security gateway 110 may construct, according to a command format specified by an IMAP4 protocol and according to the first request 600, the request 605 used to acquire the entire email message. For example, the request 605, fhn6 UID FETCH 77 (BODY.PEEK[]), used to acquire the entire email message may be formatted according to the first request 600: fhn6 UID FETCH 77 (BODY.PEEK[2]). Herein, the request 605 used to acquire the entire email message may be referred to as a first converted request 605.

In this step, the security gateway 110 may cache the first request 600 sent by the client device 100, and construct, according to the ID that is of the email message and that is in the first request 600, the request 605 used to acquire the entire email message.

In step 410, the security gateway 110 sends the first converted request 605 to the email server 120. For example, the security gateway 110 may send the first converted request 605, fhn6 UID FETCH 77 (BODY.PEEK[]), to the email server 120, to request the email server 120 to return, according to the first converted request 605, the entire email message.

In step 415, the security gateway 110 receives the email message 610 returned by the email server 120, where the email message 610 is an email message in encoded form. After receiving the first converted request, the email server 120 returns, according to the first converted request, the email message 610 indicated by a UID. The email message 610 returned by the email server 120 is an email message complying with a format specified by the MIME protocol. The email message in an MIME format includes mail content that is in encoded form. The mail content in encoded form refers to encoded mail content that is generated after the mail content is encoded by using content transfer encoding information. For a specific structure of the email message 610 returned by the email server 120, refer to FIG. 2 and the related descriptions.

An MIME information header of the email message 610 returned by the email server 120 may include content of an email header and MIME header fields such as an MIME version and a content type. For example, an MIME information header of the email message whose UID is 77 and that is returned according to the first converted request 605 by the email server 120 is:
Date: Sun, 17 Feb 2013 11:10:02 +0800 mail sent date
From: "123" 123@123.com sender information
To: "456" 456@123.com receiver information
Subject: test email subject
Mime-Version: 1.0 MIME version
Content-Type: multipart/mixed; content type
Boundary="=====001_Dragon664320174586_=====" delimiter, which indicates a beginning and an end of an MIME segment.

An MIME segment 1 of the email message whose UID is 77 and that is returned by the email server 120 includes a main body that is of the email message and that is in encoded form, where an MIME segment 1 header includes encoding information of the main body of the email message, and an MIME segment 1 body includes content of the main body of the encoded email message. For example, the MIME segment 1 of the email message whose UID is 77 is:
--=====001_Dragon664320174586_===== indicates a beginning of the MIME segment 1;
Content-Type: text/plain;
char set="gb2312" indicates that a content type of the MIME segment 1 is a type of text/plain, and a character set of text in the MIME segment 1 is "gb2312";
Content-Transfer-Encoding: base64 indicates a transfer encoding type of the MIME segment 1 is base64; and
vPu4vbz+DQo= indicates an encoded main body of the email message.

An MIME segment 2 of the email message whose UID is 77 and that is returned by the email server 120 includes a first attachment that is of the email message and that is in encoded form, where an MIME segment 2 header includes encoding information of the first attachment of the email message, and an MIME segment 2 body includes encoded content of the first attachment. An MIME segment 3 includes a second attachment that is of the email message and that is in encoded form, where an MIME segment 3 header includes encoding information of the second attachment of the email message, and an MIME segment 3 body includes encoded content of the second attachment. For example, the MIME segment 2 of the email message whose UID is 77 is:
--=====001_Dragon664320174586_===== indicates a beginning of the MIME segment 2;
Content-Type: application/octet-stream;
name=" file1.txt" indicates that a content type of the MIME segment 2 is any binary data, and a name is "file1.txt";
Content-Transfer-Encoding: base64 indicates that a transfer encoding type of the MIME segment 2 is base64;
Content-Disposition: attachment;
filename=" file1.txt" indicates that content of the MIME segment 2 is an attachment, and an attachment name is "file1.txt"; and
xPq6w6Ohuty439DLvPu1vcT6o6E= indicates encoded content of the first attachment.

In step 420, the security gateway 110 analyzes the email message 610 to obtain encoding information of the email message 610, where the encoding information includes Content-Transfer-Encoding information. As shown in FIG. 2, because the email message 610 returned by the email server 120 is in the format specified by MIME, the security gateway 110 may obtain the Content-Transfer-Encoding information of the email message 610 by analyzing the MIME information header or an MIME segment header of the email message 610, and may decode a corresponding portion of the email message 610 by using the Content-Transfer-Encoding information of the email message 610. For example, the security gateway 110 may obtain Content-Transfer-Encoding: base64 from the MIME segment 2 header of the email message 610 whose UID is 77, so as to learn that transfer encoding information of the first attachment of the email message is base64.

It should be noted that, if the Content-Transfer-Encoding information is included in the MIME information header, the Content-Transfer-Encoding information may be used to decode the entire email message. If the Content-Transfer-Encoding information is included in an MIME segment header, the Content-Transfer-Encoding information can act on only the MIME segment, and be used to decode an MIME segment body of the MIME segment.

In addition, the security gateway 110 may further obtain character set (char set) information that is in the email message 610 by analyzing the email message 610. Specifically, the security gateway 110 may obtain, from the email message 610 returned by the email server 120, Content-Type information of each MIME segment of the email message 610, so that the security gateway 110 may determine a packet type of the MIME segment according to the obtained Content-Type information. For example, the packet type may be text, image, audio, or the like. In addition, the Content-Type information may further include a character set (char set) of a text encoding manner of the MIME segment. For example, in the email message whose UID is 77 described above, in the MIME segment 1, char set="gb2312" indicates that a character set of text in the MIME segment 1 is "gb2312". Neither the MIME information header nor the MIME segment 2 includes char set information, and therefore, a character set type in the MIME segment 2 is a default character set type: ASCII.

In step 425, the security gateway 110 decodes the email message 610 according to the encoding information, so as to obtain the portion, in decoded form, of the email message. Specifically, that which encoding manner is used may be learned provided that the encoding information is obtained, and then a decoding manner corresponding to the encoding manner is used to perform decoding to obtain mail content that is of the portion, in decoded form, of the email message.

For example, the security gateway 110 may decode encoded attachment content "xPq6w6Ohuty439DLvPu1vcT6o6E=" that is in the MIME segment 2 according to the transfer encoding manner base64, to obtain content, in decoded form, of the first attachment in the email message whose UID is 77: "Hello! Nice to meet you!"

It can be understood that, the security gateway 110 may decode the entire email message 610, or may decode only the portion, required by the client device 100, of the email message, which is not limited in this embodiment. For example, the security gateway 110 may decode the entire email message 610 according to the Content-Transfer-Encoding information in the MIME information header, or may decode content of a body of an MIME segment in the MIME segment according to Content-Transfer-Encoding information in a header of the MIME segment. If the header of the MIME segment does not include Content-Transfer-Encoding information, the security gateway 110 may decode content of the body of the MIME segment according to the Content-Transfer-Encoding information in the MIME information header.

In step 430, the security gateway 110 performs security processing on the portion, in decoded form, of the email message, so as to determine whether the portion of the email message is secure. In an actual application, after the security gateway 110 decodes the email message, the security gateway 110 may further perform, according to a set security policy, the security processing on the portion, in decoded form, of the email message. If it is determined, after the security processing is performed, that the email message 610 is a secure email message, go to step 435; otherwise, go to step 440.

The set security policy may include a virus detection and removal policy, a filtering policy, and the like. For example, a security operation such as virus detection and removal may be performed on the decoded email message according to the preset virus detection and removal policy, or content filtering may be performed on the decoded email message according to the character set (char set) information in the email message and the preset filtering policy, so as to prevent the client device 100 from receiving an email message with a virus, a junk mail, or an email message with a sensitive field, thereby protecting security of the client device.

In one situation, when it is required to filter an email message received by the client device 100, a filtering policy may be generated in advance according to a string that needs to be filtered and a preset character set. In an email filtering process, it is first determined whether char set information in the portion of the email message is consistent with char set information in the filtering policy. If the char set information in the portion of the email message is consistent with the char set information in the filtering policy, decoded mail content of the portion of the email message is directly matched with the string that needs to be filtered and that is in the filtering policy. If the char set information in the portion of the email message is inconsistent with the char set information in the filtering policy, decoded mail content of the portion of the email message needs to be converted according to the char set information in the filtering policy, and then is matched with the string that needs to be filtered and that is in the filtering policy, so as to determine whether the portion of the email message includes the string that needs to be filtered.

For example, the security gateway 110 may filter, according to the set filtering policy, content, in decoded form, of the first attachment of the email message whose UID is 77. The filtering policy set in the security gateway 110 may be: filtering an email message with a string of "advertisement", and character set char set information that is set for filtering a string is "gb2312". Certainly, it can be understood that, the security gateway 110 may generate, by compiling, a status machine according to the string that needs to be filtered and that is configured in the filtering policy and according to the char set information. Because char set information of the first attachment of the email message whose UID is 77 is ASCII, and the char set information in the generated status machine is "gb2312", the char set information of the first attachment is inconsistent with the char set information in the status machine. Therefore, when the first attachment of the email message is filtered according to the set filtering policy, the content of the first attachment needs to be converted into content that is in a format of "gb2312"; and then the converted content is matched by using the status machine, to determine whether the first attachment includes the to-be-filtered string "advertisement". If the first attachment does not include the to-be-filtered string "advertisement", it is considered that the email message 610 is secure; otherwise, it is considered that the email message 610 is an insecure email message.

It should be noted that, after the security gateway 110 obtains the mail content of the portion of the email message, security processing, such as antivirus processing or mail filtering, performed on the mail content of the portion of the email message is only several processing manners enumerated in this embodiment of the present invention. In an actual application, other processing may further be performed on the mail content, which is not limited in this embodiment.

In step 435, the security gateway 110 forwards the portion 615 of the email message to the client device 100. After determining that the portion 615 of the email message is secure, the security gateway 110 may forward the portion 615 of the email message to the client device 100. For example, if the security gateway 110 determines, after performing security processing on the email message 610, that the email message 610 is a secure email message, or the security gateway 110 determines, after performing processing such as virus detection and removal on the email message 610, that the processed email message 610 is a secure email message, the security gateway 110 may forward the portion 615 of the email message to the client device 100 according to the ID that is of the portion of the email message and that is carried in the first request 600, so as to end the process of the method. For example, the security gateway 110 may return the first attachment in the email message whose UID is 77 to the client device 100 according to an attachment ID "2" in the first request fhn7 UID FETCH 77(BODY.PEEK[2]).

In step 440, the security gateway 110 refuses to forward the portion of the email message to the client device. If the security gateway 110 determines, after performing security processing on the email message 610, that the email message 610 is an insecure email, the security gateway 110 may refuse to forward the portion 615 of the email message to the client device 100. For example, the security gateway 110 may send, to the client device 100, information that acquiring of the email message fails, discard the email message 610, or send a modified email message 610 to the client device 100. For example, the security gateway 110 may screen out or modify some sentences in the email message 610 and then send the email message 610 to the client device 100, so as to perform security protection on the client device 100.

According to the method for processing an email request shown in FIG. 4, a security gateway 110 converts a request 600 that is used to acquire other portions, except an email header, of an email message and that is of a client device 100 into a request 605 for acquiring the entire email message, so that the security gateway 110 can acquire, from the entire email message 610 returned by an email server 120, content transfer encoding information of the portion 615, to be acquired by the client device 100, of the email message. In addition, the security gateway 110 may use the content transfer encoding information of the portion of the email message to decode the portion 615 of the email message, so that the security gateway 110 can also obtain content of the portion, in decoded form, of the email message in an application scenario in which the client device 100 acquires only the portion, except the email header, of the email message, thereby enhancing protection of the client device 100.

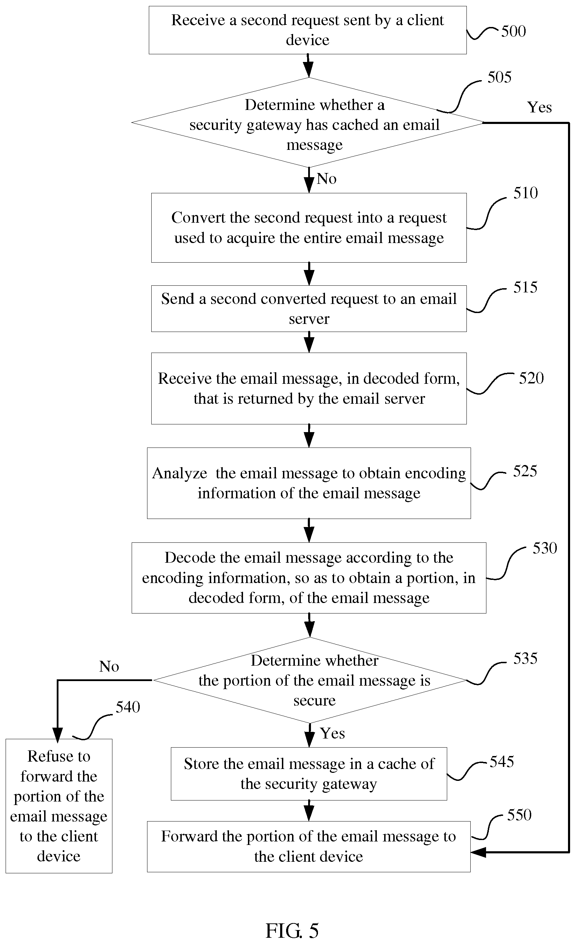

In another situation, to improve a speed of the client device 100 in acquiring an email message, the security gateway 110 may further cache an email message obtained from the email server 120. Specifically, the security gateway 110 may further process, by using a method shown in FIG. 5, a mail acquiring request sent by the client device 100, where the mail acquiring request is used to acquire, from the email server 120, a portion of the email message. FIG. 5 is a flowchart of another method for processing an email request according to an embodiment of the present invention. The method may also be executed by the security gateway 110 in FIG. 1, FIG. 3, and FIG. 6. The following describes the method shown in FIG. 5 with reference to FIG. 1 and FIG. 6. As shown in FIG. 5, the method may include:

In step 500, the security gateway 110 receives a second request sent by the client device 100, where the second request is used to acquire a portion of an email message, and the portion of the email message does not include an email header of the email message.

The second request is also formatted based on a FETCH command of IMAP4. For example, the second request may be fhn7 UID FETCH 77 (BODY.PEEK[3]), and is used to request the email server to return a second attachment of an email message whose email ID is 77, where "77" is the email ID of the email message, and "3" is an ID of a to-be-acquired portion of the email message. For detailed descriptions about the request sent by the client device, refer to the related descriptions in the embodiment in FIG. 4.

It should be noted that, the first and the second in the first request, the second request, the first converted request, and the second converted request in the embodiments of the present invention are only for clarity of description and for distinguishing the requests sent by the client device rather than for setting any limit on a time, a sequence, or the like of the requests sent by the client device.

In step 505, the security gateway 110 determines whether the security gateway 110 has cached the email message. Because in a network system shown in FIG. 1, the security gateway 110 generally processes, in a proxy manner, a mail operation request sent by the client device 100. The security gateway 110 has a caching function. For example, the security gateway 110 may continuously cache an email message acquired from the email server 120 in a local cache. After receiving the second request of the client device 100, the security gateway 110 determines, according to the second request, whether the security gateway 110 has stored the email message required to be acquired by the client device 100. If the security gateway 110 does not store the email message required to be acquired by the client device 100, the security gateway 110 may execute step 510. If the security gateway 110 has stored the email message required to be acquired by the client device 100, the security gateway 110 may directly execute step 550, and directly send the portion of the email message, stored by the security gateway 110, to the client device 100. In this way, a speed and efficiency of the client device 100 in acquiring the email message can be significantly improved.

Specifically, when determining whether the email message is cached, the security gateway 110 may determine, according to an email ID carried in the second request, whether the email message is cached.

In step 510, the security gateway 110 converts the second request into a request used to acquire the entire email message. The security gateway 110 may construct, according to the email ID carried in the second request and a command format specified by IMAP4, the request 605 used to acquire the entire email message. For example, the request, fhn7 UID FETCH 77 (BODY.PEEK[]), used to acquire the entire email message may be formatted according to the second request: fhn7 UID FETCH 77 (BODY.PEEK[3]); herein the request used to acquire the entire email message may be referred to a second converted request.

It can be understood that, in this step, the security gateway 110 may first cache the second request sent by the client device 100 in the memory 320, and then construct, according to the email ID in the second request, the request 605 used to acquire the entire email message.

In step 515, the security gateway 110 sends the second converted request to the email server. For example, the security gateway 110 may send the second converted request fhn7 UID FETCH 77 (BODY.PEEK[]) to the email server 120, to request the email server 120 to return, according to the second converted request, the entire email message whose UID is 77.

In step 520, the security gateway 110 receives the email message 610, in encoded form, that is returned by the email server 120. The email message 610 returned by the email server 120 has a format specified by MIME, and for details, refer to the related descriptions in the embodiments shown in FIG. 2 and FIG. 4.

In step 525, the security gateway 110 analyzes the email message 610 to obtain encoding information of the email message.

In step 530, the security gateway 110 decodes the email message 610 according to the encoding information, so as to obtain the portion, in decoded form, of the email message.

In step 535, the security gateway 110 performs security processing on the portion, in decoded form, of the email message, so as to determine whether the portion of the email message is secure. If the security gateway 110 determines, after performing the security processing, that the email message is a secure email message, go to step 545; otherwise, go to step 540.

In step 540, the security gateway 110 refuses to forward the portion of the email message to the client device.

In step 545, the security gateway 110 stores the email message in the cache of the security gateway 110. Specifically, when it is determined, in step 505 according to the email ID carried in the second request, that the security gateway 110 has not cached the email message 610, it means that the security gateway 110 has not obtained the email message 610 from the email server 120. When performing security processing on the decoded email message 610 and determining that the email message 610 is secure, the security gateway 110 may store the email message 610 in the cache of the security gateway 110. When the security gateway 110 receives again a request for acquiring the email message 610, the security gateway 110 may directly forward the email message 610 or any portion of the email message 610 in the cache to the client device 100, so as to improve a speed and efficiency of the client device 100 in obtaining the email message.

In step 550, the security gateway 110 forwards the portion 615 of the email message to the client device. In one situation, if the security gateway 110 determines, after performing security processing on the email message 610, that the email message 610 is a secure email message, or the security gateway 110 determines, after performing processing such as virus detection and removal on the email message 610, that the processed email message is a secure email message, the security gateway 110 may forward the portion 615 of the email message to the client device 100 according to the ID that is of the portion of the email message and that is carried in the second request. For example, the security gateway 110 may return the second attachment in the email message whose UID is 77 to the client device 100 according to an attachment ID "3" in the second request fhn7 UID FETCH 77(BODY.PEEK[3]).

In another situation, when the security gateway 110 determines, in step 505, that the security gateway 110 has cached the email message 610, the security gateway 110 may also directly execute step 550, and forward the portion 615 of the email message, cached in the security gateway 110, to the client device 100 according to the ID that is of the portion 615 of the email message and that is carried in the second request, so as to improve a speed and efficiency of the client device 100 in obtaining the email message.

It should be noted that, the step of caching the email message 610 (for example, step 545 in FIG. 5) may be executed after the email message 610 is obtained from the email server 120, or may be executed after security processing is performed on the email message 610, or may be executed before the portion 615 of the email message is forwarded to the client device 100, or may be executed at the same time the portion 615 of the email message is forwarded to the client device 100, which is not limited in this embodiment. It can be understood that, if the email message 610 is cached after the email message 610 is obtained and before security processing is performed on the email message 610, when it is found, after the security processing is performed on the email message 610, that the email message is insecure, the email message 610 may be deleted from the cache.

It can be clearly understood by a person skilled in the art that, for ease and brevity of description, for descriptions of some steps in the embodiment shown in FIG. 5, refer to the detailed descriptions in the corresponding process in the embodiment shown in FIG. 4.

According to the method for processing an email request shown in FIG. 5, a security gateway 110 can first determine, after receiving a request that is for acquiring a portion of an email message and that is sent by a client device 100, whether the email message required to be acquired by the client device 100 is stored in a cache. If the security gateway 110 has stored the email message required to be acquired by the client device 100, the security gateway 110 may directly send the portion of the email message, stored by the security gateway 110, to the client device 100, so that a speed and efficiency of the client device 100 in acquiring the email message can be significantly improved. If the security gateway 110 does not store the email message required to be acquired by the client device 100, the security gateway 110 converts the request of the client device 100 into a request for acquiring the entire email message, so that the security gateway 110 can acquire, from the entire email message returned according to the converted request by the email server 120, content transfer encoding information of the portion, to be acquired by the client device 100, of the email message. Further, the security gateway 110 may decode the portion of the email message by using the content transfer encoding information of the portion of the email message, so that the security gateway 110 can also identify and obtain content of the portion, acquired by the client device 100, of the email message. Further, the security gateway 110 may perform a security processing operation such as mail filtering or virus detection and removal on content of the decoded portion of the email message, and then forward the portion of the email message to the client device 100, so as to ensure security of the client device 100. More further, the security gateway 110 can further cache, after determining that the email message is secure, the email message acquired from the email server 120, so that the security gateway 110 can return the cached email message to the client device 100 after receiving a mail operation request of the client device 100 subsequently, so as to improve a speed and efficiency of the client device 100 in acquiring the email message.

It should be noted that, the embodiments provided by the application are only exemplary, and the security gateway in the embodiments of the present invention is also only an example of the network device; the embodiments of the present invention may also be applied to another network device, for example, a firewall, provided that the network device can implement, based on IMAP4, a mail proxy function, which is not limited herein. In addition, the network device in the embodiments of the present invention may be separately deployed on a network as an independent device, or may be located in another device such as a firewall or a gateway, which is not limited herein either.

## Claims

1. A method, executed by a security gateway (110), for processing a request that a client device acquires an email message from an email server, the method comprising the steps of:
receiving (400) a first request (600) sent by the client device, wherein the first request (600) is used to acquire a portion of the email message, and the portion of the email message does not comprise an email header of the email message;
converting (405) the first request (600) into a first converted request (605) used to acquire the entire email message (610), wherein the first request sent by the client device and the first converted request (605) are formatted according to Internet Message Access Protocol 4, IMAP4;
sending (410) the first converted request (605) to the email server;
receiving (415) the email message (610) returned by the email server, wherein the email message is an email message in encoded form;
analyzing (420) the email message (610) to obtain encoding information of the email message, wherein the encoding information includes Content-Transfer-Encoding information, and the Content-Transfer-Encoding information is obtained by analyzing an Multipurpose Internet Mail Extensions, MIME, information header or an MIME segment header of the email message (610);
decoding (425) the email message (610) according to the encoding information, so as to obtain the portion, in decoded form, of the email message;
performing (430) security processing on the portion, in decoded form, of the email message, so as to determine whether the portion of the email message is secure; and
forwarding (435) the portion of the email message (615) to the client device if the portion of the email message is determined to be secure; or refusing (440) to forward the portion of the email message to the client device if the email message is determined to be an insecure email.

2. The method according to claim 1, wherein the first request comprises an email ID of the email message and an ID of the portion of the email message; and wherein the step of converting the first request into a first converted request (605) used to acquire the entire email message comprises the step of :
converting, according to the email ID, the first request into the first converted request (605) used to acquire the entire email message; and
wherein the step of forwarding the portion of the email message to the client device comprises the step of: forwarding the portion of the email message to the client device according to the ID of the portion of the email message.

3. The method according to claim 1, further comprising the step of: performing security processing on the portion, in decoded form, of the email message, so as to determine whether the portion of the email message is secure; wherein the step of forwarding the portion of the email message to the client device comprises the step of : forwarding the portion of the email message to the client device when it is determined that the portion of the email message is secure.

4. The method according to claim 3, further comprising the step of : acquiring character set information in the email message returned by the email server; wherein the step of performing security processing on the portion, in decoded form, of the email message, so as to determine whether the portion of the email message is secure comprises the step of : performing, according to a security policy and the character set information, security processing on the portion, in decoded form, of the email message, so as to determine whether the portion of the email message is secure.

5. The method according to claim 1, further comprising the step of : storing the email message in a cache of the security gateway (110).

6. The method according to claim 5, further comprising the steps of :
receiving a second request sent by the client device, wherein the second request is used to acquire a second portion of the email message, the second portion of the email message does not comprise the email header of the email message, and the second request comprises an email ID of the email message and an ID of the second portion of the email message;
determining, according to the email ID, that the security gateway (110) has cached the email message; and
forwarding the second portion of the email message to the client device according to the ID of the second portion of the email message.

7. A security gateway (110), comprising:
a communications interface (310), configured to communicate with a client device and an email server; and
a processor (330), configured to perform the steps of the method of any of claims 1 to 6.

## Patentansprüche

1. Verfahren, ausgeführt durch einen Sicherheitsgateway (110), zum Verarbeiten einer Anfrage, dass ein Client-Gerät eine E-Mail-Nachricht von einem E-Mail-Server erfasst, wobei das Verfahren die folgenden Schritte umfasst:
Empfangen (400) einer ersten, von dem Client-Gerät gesendeten Anfrage (600), wobei die erste Anfrage (600) verwendet wird, um einen Abschnitt der E-Mail-Nachricht zu erfassen, und der Abschnitt der E-Mail-Nachricht keinen E-Mail-Header der E-Mail-Nachricht umfasst;
Konvertieren (405) der ersten Anfrage (600) in eine erste konvertierte Anfrage (605), die zum Erfassen der gesamten E-Mail-Nachricht (610) verwendet wird, wobei die erste, von dem Client-Gerät gesendete Anfrage und die erste konvertierte Anfrage (605) gemäß dem Internetprotokoll zum Zugriff auf E-Mails auf zentralen E-Mail-Servern (Internet Message Access Protocol 4 - IMAP4) formatiert sind;
Senden (410) der ersten konvertierten Anfrage (605) an den E-Mail-Server;
Empfangen (415) der durch den E-Mail-Server zurückgeschickten E-Mail-Nachricht (610), wobei es sich bei der E-Mail-Nachricht um eine E-Mail-Nachricht in codierter Form handelt;
Analysieren (420) der E-Mail-Nachricht (610), um Codierungsinformationen der E-Mail-Nachricht zu erhalten, wobei die Codierungsinformationen Codierungsinformationen zur Übertragung von Inhalten (Content Transfer) beinhalten, und die Content-Transfer-Codierungsinformationen durch Analysieren von Multipurpose Internet Mail Extensions (MIME), einem Informationsheader oder einem MIME-Segment-Header der E-Mail-Nachricht (610) erhalten werden;
Decodieren (425) der E-Mail-Nachricht (610) gemäß den Codierungsinformationen, um den Abschnitt der E-Mail-Nachricht in decodierter Form zu erhalten;
Durchführen (430) von Sicherheitsverarbeitung an dem Abschnitt der E-Mail-Nachricht in decodierter Form, um zu bestimmen, ob der Abschnitt der E-Mail-Nachricht sicher ist; und
Weiterleiten (435) des Abschnitts der E-Mail-Nachricht (615) an das Client-Gerät, wenn der Abschnitt der E-Mail-Nachricht als sicher bestimmt worden ist; oder Ablehnen (440) des Weiterleitens des Abschnitts der E-Mail-Nachricht an das Client-Gerät, wenn die E-Mail-Nachricht als eine unsichere E-Mail bestimmt worden ist.

2. Verfahren nach Anspruch 1, wobei die erste Anfrage eine E-Mail-ID der E-Mail-Nachricht und eine ID des Abschnitts der E-Mail-Nachricht umfasst; und wobei der Schritt des
Konvertierens der ersten Anfrage in eine erste konvertierte Anfrage (605), die verwendet wird, um die gesamte E-Mail-Nachricht zu erfassen, den Schritt des Konvertierens, gemäß der E-Mail-ID, der ersten Anfrage in die erste konvertierte Anfrage (605), die verwendet wird, um die gesamte E-Mail-Nachricht zu erfassen, umfasst; und
wobei der Schritt des
Weiterleitens des Abschnitts der E-Mail-Nachricht an das Client-Gerät den Schritt des
Weiterleitens des Abschnitts der E-Mail-Nachricht an das Client-Gerät gemäß der ID des Abschnitts der E-Mail-Nachricht umfasst.

3. Verfahren nach Anspruch 1, ferner umfassend den Schritt des
Durchführens von Sicherheitsverarbeitung an dem Abschnitt der E-Mail-Nachricht in decodierter Form, um zu bestimmen, ob der Abschnitt der E-Mail-Nachricht sicher ist; wobei der Schritt des
Weiterleitens des Abschnitts der E-Mail-Nachricht an das Client-Gerät den Schritt des
Weiterleitens des Abschnitts der E-Mail-Nachricht an das Client-Gerät, wenn bestimmt worden ist, dass der Abschnitt der E-Mail-Nachricht sicher ist, umfasst.

4. Verfahren nach Anspruch 3, ferner umfassend den Schritt des
Erfassens von Zeichensatzinformationen in der E-Mail-Nachricht, die von dem E-Mail-Server zurückgeschickt wurde; wobei der Schritt des
Durchführens von Sicherheitsverarbeitung an dem Abschnitt der E-Mail-Nachricht in decodierter Form, um zu bestimmen, ob der Abschnitt der E-Mail-Nachricht sicher ist, den Schritt des
Durchführens, gemäß einer Sicherheitsstrategie und den Zeichensatzinformationen, von Sicherheitsverarbeitung an dem Abschnitt der E-Mail-Nachricht in decodierter Form, um zu bestimmen, ob der Abschnitt der E-Mail-Nachricht sicher ist, umfasst.

5. Verfahren nach Anspruch 1, ferner umfassend den Schritt des
Speicherns der E-Mail-Nachricht in einem Zwischenspeicher des Sicherheitsgateways (110).

6. Verfahren nach Anspruch 5, ferner umfassend die Schritte des Empfangens einer zweiten, von dem Client-Gerät gesendeten Anfrage, wobei die zweite Anfrage verwendet wird, um einen zweiten Abschnitt der E-Mail-Nachricht zu erfassen, wobei der zweite Abschnitt der E-Mail-Nachricht den E-Mail-Header der E-Mail-Nachricht nicht umfasst und die zweite Anfrage eine E-Mail-ID der E-Mail-Nachricht und eine ID des zweiten Abschnitts der E-Mail-Nachricht umfasst; Bestimmen, gemäß der E-Mail-ID, dass der Sicherheitsgateway (110) die E-Mail-Nachricht zwischengespeichert hat; und
Weiterleiten des zweiten Abschnitts der E-Mail-Nachricht an das Client-Gerät gemäß der ID des zweiten Abschnitts der E-Mail-Nachricht.

7. Sicherheitsgateway (110), Folgendes umfassend:
eine Kommunikationsschnittstelle (310), konfiguriert, um mit einem Client-Gerät und einem E-Mail-Server zu kommunizieren; und
einen Prozessor (330), konfiguriert, um die Schritte des Verfahrens nach einem der Ansprüche 1 bis 6 durchzuführen.

## Revendications

1. Procédé, exécuté par une passerelle de sécurité (110), destiné à traiter une demande d'acquisition, par un dispositif client, d'un message de courrier électronique auprès d'un serveur de messagerie électronique, le procédé comprenant les étapes consistant à :
recevoir (400) une première demande (600) envoyée par le dispositif client, la première demande (600) étant utilisée pour acquérir une partie du message de courrier électronique, et la partie du message de courrier électronique ne comprend pas un en-tête de courrier électronique du message de courrier électronique ;
convertir (405) la première demande (600) en une première demande convertie (605) utilisée pour acquérir l'intégralité du message de courrier électronique (610), dans lequel la première demande envoyée par le dispositif client et la première demande convertie (605) sont formatées selon le protocole d'accès aux messages Internet 4, IMAP4 ;
envoyer (410) la première demande convertie (605) au serveur de messagerie ;
recevoir (415) le message de courrier électronique (610) renvoyé par le serveur de messagerie électronique, dans lequel le message de courrier électronique est un message de courrier électronique sous forme codée ;
analyser (420) le message de courrier électronique (610) pour obtenir des informations de codage du message de courrier électronique, dans lequel les informations de codage comprennent des informations de codage de transfert de contenu, et les informations de codage de transfert de contenu sont obtenues en analysant un en-tête d'informations d'extensions de courrier Internet à fonctions multiples, MIME, ou un en-tête de segment MIME du message électronique (610) ;
décoder (425) le message de courrier électronique (610) en fonction des informations de codage, de manière à obtenir la partie, sous forme décodée, du message de courrier électronique ;
effectuer (430) un traitement de sécurité sur la partie, sous forme décodée, du message de courrier électronique, afin de déterminer si la partie du message de courrier électronique est sûre ; et
transférer (435) la partie du message de courrier électronique (615) au dispositif client si la partie du message de courrier électronique est jugée sûre ; ou refuser (440) de transférer la partie du message de courrier électronique au dispositif client s'il est déterminé que le message de courrier électronique est un courrier électronique non sûr.

2. Procédé selon la revendication 1, dans lequel la première demande comprend un identifiant de courrier électronique du message de courrier électronique et un identifiant de la partie du message de courrier électronique ; et dans lequel l'étape de conversion de la première demande en une première demande convertie (605) utilisée pour acquérir le message de courrier électronique complet comprend l'étape consistant à :
convertir, en fonction de l'identifiant de courrier électronique, la première demande en la première demande convertie (605) utilisée pour acquérir le message de courrier électronique complet ; et
dans lequel l'étape de transfert de la partie du message de courrier électronique au dispositif client comprend l'étape consistant à :
transférer la partie du message de courrier électronique au dispositif client en fonction de l'identifiant de la partie du message de courrier électronique.

3. Procédé selon la revendication 1, comprenant en outre l'étape consistant à :
effectuer un traitement de sécurité sur la partie, sous forme décodée, du message de courrier électronique, afin de déterminer si la partie du message de courrier électronique est sûre ou pas ; dans lequel l'étape de transfert de la partie du message de courrier électronique au dispositif client comprend l'étape consistant à :
transférer la partie du message de courrier électronique au dispositif client lorsqu'il est déterminé que la partie du message de courrier électronique est sûre.

4. Procédé selon la revendication 3, comprenant en outre l'étape consistant à acquérir des informations de jeu de caractères dans le message de courrier électronique renvoyé par le serveur de messagerie ; dans lequel l'étape consistant à effectuer un traitement de sécurité sur la partie, sous forme décodée, du message de courrier électronique, afin de déterminer si la partie du message de courrier électronique est sûre comprend l'étape consistant à :
effectuer, conformément à une politique de sécurité et aux informations de jeu de caractères, un traitement de sécurité sur la partie, sous forme décodée, du message de courrier électronique, afin de déterminer si la partie du message de courrier électronique est sûre.

5. Procédé selon la revendication 1, comprenant en outre l'étape consistant à :
stocker le message de courrier électronique dans une mémoire cache de la passerelle de sécurité (110).

6. Procédé selon la revendication 5, comprenant en outre les étapes consistant à :
recevoir une seconde demande envoyée par le dispositif client, dans lequel la seconde demande est utilisée pour acquérir une seconde partie du message de courrier électronique, la seconde partie du message de courrier électronique ne comprend pas l'en-tête de courrier électronique du message de courrier électronique, et la seconde demande comprenant un identifiant de courrier électronique du message de courrier électronique et un identifiant de la seconde partie du message de courrier électronique ;
déterminer, en fonction de l'identifiant de courrier électronique, que la passerelle de sécurité (110) a mis en cache le message de courrier électronique ; et
transférer la seconde partie du message de courrier électronique au dispositif client en fonction de l'identifiant de la seconde partie du message de courrier électronique.

7. Passerelle de sécurité (110) comprenant :
une interface de communication (310), configurée pour communiquer avec un dispositif client et un serveur de messagerie ; et
un processeur (330), configuré pour exécuter les étapes du procédé selon l'une quelconque des revendications 1 à 6.
